# EUROPÄISCHE PATENTSCHRIFT

(11) **EP 3 872 526 B1**
(45) Veröffentlichungstag und Bekanntmachung des Hinweises auf die Patenterteilung: **12.01.2022**
(21) Anmeldenummer: 21152961.5
(22) Anmeldetag: 22.01.2021
(51) Int. Cl.: G01S 17/10, G01S 7/481, G01S 17/88, G01S 7/4865, F16P 3/14

(54) **VORRICHTUNG ZUM ÜBERWACHEN EINES SCHUTZBEREICHS**
DEVICE FOR MONITORING A SAFETY ZONE
DISPOSITIF DE SURVEILLANCE D'UNE ZONE PROTÉGÉE

(30) Priorität: 26.02.2020 DE 102020105037
(43) Veröffentlichungstag der Anmeldung: 01.09.2021
(73) Patentinhaber: SICK AG, 79183 Waldkirch (DE)
(72) Erfinder: Zwölfer, Ulrich, 79183 Waldkirch (DE)

(56) Entgegenhaltungen:
- EP-A1- 3 091 272
- DE-A1-102006 048 098

## Beschreibung

Die Erfindung betrifft eine Vorrichtung zum Überwachen eines Schutzbereichs nach dem Oberbegriff des Anspruchs 1.

Derartige Schutzeinrichtungen werden nach dem Stand der Technik in vielfältiger Weise verwendet, um zum Beispiel bei einem unerlaubten Zugang von Personen zu einem Gefahrenbereich Maßnahmen einleiten zu können, damit eine Verletzung bzw. ein Schaden vermieden wird.

Die Variantenvielfalt der für diese Aufgaben verwendeten optoelektronischen Schutzeinrichtungen ist aufgrund der jeweiligen Einsatzbedingung sehr breit gefächert und reicht von Einstrahllichtschranken über mehrstrahlige Lichtgitter bis zu Scannern oder Kameralösungen. Das Funktionsprinzip aller dieser optoelektronischen Schutzeinrichtungen besteht darin, dass ein Schutzbereich, beispielsweise eine Strecke, eine Fläche oder ein Raum von Lichtstrahlen durchdrungen wird und diese Lichtstrahlen danach von einem oder mehreren lichtempfindlichen Empfängern erfasst werden. Gelangt dabei ein Objekt in einen oder mehrere dieser Lichtstrahlen, so werden diese beeinflusst, d. h. unterbrochen, abgelenkt, abgeschwächt oder dergleichen. Diese Beeinflussung wird dann von dem bzw. den lichtempfindlichen Empfängern erkannt. In einer nachgeschalteten Auswerteeinheit werden die vom Lichtempfänger gelieferten Signale verarbeitet, so dass die Schutzeinrichtungen eine entsprechende Zustandsmeldung ausgeben können.

Eine optoelektronische Schutzeinrichtung in Form eines mehrstrahligen Lichtgitters oder Lichtvorhangs ist beispielsweise in EP 1 089 030 B1 beschrieben. Dort sind mehrere aus Sender-Empfänger-Paaren bestehende Lichtlaufzeitsensoren, auch Time-Of-Flight Sensoren genannt, in einem gemeinsamen Gehäuse angeordnet, das auf der einen Seite eines Schutzbereichs angeordnet ist, während auf der anderen Seite des Schutzbereichs eine Schutzbereichsgrenze zum Reflektieren oder Remittieren des von den Sendern ausgesandten Lichtstrahls auf den jeweiligen Empfänger ausgebildet ist.

Der Abstand zwischen den Sender-Empfänger-Paaren auf der einen Seite und der reflektierenden Schutzbereichsgrenze auf der anderen Seite ist bekannt, so dass dieser Abstand bzw. die Position des Begrenzungselements dem System eingelernt werden kann.

Dringt ein Objekt in den Schutzbereich ein, so dass zumindest einer der ausgesandten Lichtstrahlen unterbrochen wird, ändert sich die ermittelte Lichtlaufzeit des entsprechenden Lichtstrahls, so dass ein Unterbrechungssignal erzeugt wird, das je nach Anwendung eine gewünschte Folgeaktion auslöst. Dies kann beispielsweise ein Stillsetzen einer zu überwachenden Maschine, ein Abgeben eines Alarmsignals, eine Messwertausgabe oder auch eine Messwertspeicherung sein.

Die beschriebene Schutzeinrichtung ist im Wesentlichen zur Erfassung verhältnismäßig großer Objekte wie beispielsweise einer Person oder einer Palette mit kistenförmigen Elementen vorgesehen.

Die Tiefenauflösung, d.h. die kleinste erkennbare Abstandsänderung in Lichtstrahlrichtung solcher Lichtlaufzeitsensoren ist begrenzt. Dies führt insbesondere dazu, dass Objekte, die kleiner als die Tiefenauflösung des TOF Sensors sind, in der Nähe der reflektierenden Schutzbereichsgrenze des Schutzbereichs nicht sicher erkannt werden können, da bei Auswertung der Lichtlaufzeit nicht sicher erkannt werden kann, ob die Laufzeitänderung durch den Eintritt eines Objekts bedingt oder eine Schwankung aufgrund der begrenzten Tiefenauflösung ist.

Lichtlaufzeitsensoren, deren Tiefenauflösung ausreichend genug ist, um in der Nähe einer Schutzbereichsgrenze Objekte mit Objektgrößen kleiner als 20 mm zuverlässig zu erkennen und damit geeignet sind für Anwendungsfälle, in denen Objekte in der Größe eines Fingers erkannt werden sollen, beispielsweise als Eingriffsschutz für einen Gefahrenbereich, sind in der Regel sehr aufwändig und ein Einsatz in den eingangs beschriebenen Schutzeinrichtungen ist daher nicht wirtschaftlich.

Um die Anforderung einer sicheren Objekterkennung von Objekte mit Objektgrößen kleiner als 20 mm zu erfüllen, sind aus dem Stand der Technik , beispielsweise aus der DE 10 2006 048 098 A1, bildgebende Vorrichtungen bekannt, die eine Beleuchtungseinrichtung zur Ausleuchtung eines zu überwachenden Bereiches und eine Bildaufnahmekamera aufweisen, die ein Abbild von wenigstens einer des zu überwachenden Bereiches begrenzenden Fläche auf einem ortsauflösenden Lichtempfänger erzeugt und dabei in Abhängigkeit vom Abbild auf dem Lichtempfänger entsprechende Bildsignale einer Auswerteeinheit zuführt, die ein Schaltsignal erzeugt, wenn sich nicht zulässige Objekte innerhalb des zu überwachenden Bereiches befinden, wobei die Fläche ein längliches Muster in Form eines die Begrenzung bildenden Referenzstreifens auf einem Hintergrund aufweist, so dass sich das Muster über die gesamte Länge der von der Kamera eingesehenen Fläche erstreckt. Derartige Systeme benötigen jedoch verhältnismäßig aufwändige Bildaufnahme- und Verarbeitungssysteme. Zudem können die Referenzstreifen (z.B. Reflektorfolien) anfällig gegenüber Verschmutzung sein Des Weiteren kann bei Verwendung von nur einer Kamera nur die Anwesenheit eines Objekts, aber nicht dessen Position detektiert werden.

Aus der EP 3 091272 A1 ist ein Lichtgitter bekannt, das auf dem Lichtlaufzeitprinzip basiert. Auf einer den Lichtsendern und Lichtempfängern des Lichtgitters gegenüberliegenden Seite eines Messbereichs kann eine Referenzfläche angeordnet sein, wobei Lichtimpulse der Lichtsender des Lichtgitters auf die Referenzfläche treffen und die zurückgeworfenen Lichtimpulse auf Lichtempfänger des Lichtgitters treffen. Die Referenzfläche begrenzt dabei den Messbereich. Zur Erkennung von Objekten mit Objektgrößen kleiner als 20 mm wären auch hier aufwändige Lichtlaufzeitsensoren nötig.

Aufgabe der Erfindung ist es daher, eine auf Lichtlaufzeitsensoren basierende optoelektronische Schutzeinrichtung so weiterzubilden, dass diese Objekte mit einer Größe kleiner als die Tiefenauflösung der Lichtlaufzeitsensoren sicher erkennen kann.

Eine erfindungsgemäße Vorrichtung zur Überwachung eines Schutzbereichs, beispielsweise eine Strecke, eine Fläche oder ein Raum der von Lichtstrahlen durchdrungen wird, welche nach Reflexion oder Remission von einem oder mehreren lichtempfindlichen Empfängern erfasst werden, weist dazu mindestens einen Lichtlaufzeitsensor auf. Der Lichtlaufzeitsensor beinhaltet wenigstens einen Sender zum Aussenden von Lichtstrahlen in den Schutzbereich und mindestens einen Empfänger zum Empfangen von aus dem Schutzbereich reflektierten oder remittierten Lichtstrahlen.

Eine Auswerteeinheit ermittelt eine Lichtlaufzeit zwischen Aussenden und Empfangen der Lichtstrahlen. Eine Überwachungseinheit wertet die ermittelte Lichtlaufzeit aus. Wenn die ermittelte Lichtlaufzeit von einer vorbestimmten Maximal-Lichtlaufzeit zumindest um einen vorgegebenen Schwellenwert abweicht, kann die Überwachungseinheit ein Unterbrechungssignal absenden, beispielsweise an einen Roboter in einem Gefahrenbereich, der dann bei Eintritt eines Objektes in den Schutzbereich angehalten oder abgeschaltet werden kann.

Der Schutzbereich ist auf einer dem Lichtlaufzeitsensor gegenüberliegenden Seite des Schutzbereichs zumindest teilweise durch ein Begrenzungselement begrenzt, das in einem ersten Abstand vom Lichtlaufzeitsensor angeordnet ist. Der erste Abstand bestimmt somit im Wesentlichen die Dimension des Schutzbereichs in Lichtstrahlrichtung.

Zum Reflektieren oder Remittieren der ausgesendeten Lichtstrahlen ist auf der dem Lichtlaufzeitsensor gegenüberliegenden Seite des Schutzbereichs ein Referenzelement in einem zweiten Abstand angeordnet, der größer als der erste Abstand, also der Abstand zwischen dem Lichtlaufzeitsensor und dem den Schutzbereich begrenzenden Begrenzungselement. Die Lichtstrahlen werden also nicht an dem den Schutzbereich begrenzenden Begrenzungselement und damit wie im Stand der Technik an der Schutzbereichsgrenze, sondern an dem weiter entfernten Referenzelement reflektiert oder remittiert. In dem Bereich zwischen Begrenzungselement und Referenzelement ist bevorzugt kein Durchgriff in einen Gefahrenbereich möglich.

Die Differenz zwischen dem zweiten Abstand und dem ersten Abstand ist wenigstens so groß wie eine Tiefenauflösung des Lichtlaufzeitsensors, also die kleinste durch den Lichtlaufsensor detektierbare Abstandsänderung, besonders bevorzugt größer als die Tiefenauflösung des Lichtlaufzeitsensors. Somit wird bei Unterbrechung des Lichtstrahls immer eine Änderung der Lichtlaufzeit gemessen, die einem Abstand entspricht, der größer als die Tiefenauflösung des Lichtlaufzeitsensors ist.

Dies hat den Vorteil, dass Lichtlaufzeitsensoren mit einer Tiefenauflösung verwendet werden können, die schlechter als die kleinste zu detektierende Objektgröße ist. Es kann also auf weniger komplexe Lichtlaufzeitsensoren und Auswerteeinheiten zurückgegriffen werden, die entsprechend kostengünstig sind.

Die Differenz zwischen dem zweiten Abstand und dem ersten Abstand kann wenigstens 15 mm, bevorzugt wenigstens 25 mm betragen, so dass handelsübliche kostengünstige Lichtlaufzeitsensoren in der Vorrichtung verwendet werden können.

Zur Überwachung eines flächenförmigen Schutzbereichs kann eine Vielzahl von Lichtlaufzeitsensoren in einer Linie angeordnet sein und somit ein Lichtgitter oder einen Lichtvorhang bilden. Die Lichtlaufzeitsensoren können mit einer zentralen Auswerteeinheit verbunden sein, die die Lichtlaufzeiten der einzelnen Sensoren ermittelt. In einer alternativen Ausführungsform kann jeder Lichtlaufzeitsensor eine eigene Auswerteinheit zur Ermittlung der Lichtlaufzeit aufweisen.

In einer weiteren Ausführungsform können die Lichtlaufzeitsensoren zur Überwachung eines volumenförmigen, also dreidimensionalen Schutzbereichs in einer Matrix angeordnet sein. Wie in der vorher beschriebenen Ausführungsform können die Lichtlaufzeitsensoren mit einer zentralen Auswerteeinheit verbunden sein, oder jeder Lichtlaufzeitsensor eine eigene Auswerteinheit zur Ermittlung der Lichtlaufzeit aufweisen.

Bei linienförmiger oder matrixförmiger Anordnung der Lichtlaufzeitsensoren kann ein Strahlabstand der Lichtstrahlen benachbarter Lichtlaufzeitsensoren kleiner als 15 mm, bevorzugt kleiner als 10 mm sein. Somit können auch Objekte in der Größenordnung eines Fingers im Schutzbereich sicher detektiert werden.

Die erfindungsgemäße Vorrichtung kann nicht nur für eine einfache Detektion eines Objektes in einem Schutzbereich verwendet werden. Auch komplexere Erfassungsaufgaben wie beispielsweise das Erkennen vorher eingelernter Objektformen und Erzeugen eines Unterbrechungssignals abhängig vom erkannten Objekt wie beispielsweise in der EP 1 089 030 B1 beschrieben, sind möglich.

Die Erfindung wird nachfolgend anhand von Ausführungsbeispielen unter Bezugnahme auf die Zeichnung näher erläutert. Gleiche Bezugszeichen kennzeichnen gleiche oder funktionsgleiche Elemente. In der Zeichnung zeigen:
- Fig. 1: eine schematische Darstellung einer erfindungsgemäß ausgebildeten Vorrichtung zur Überwachung eines Schutzbereichs
- Fig. 2: eine schematische Darstellung einer erfindungsgemäß ausgebildeten Vorrichtung zur Überwachung eines Schutzbereichs mit linienförmiger Anordnung einer Vielzahl von Lichtlaufzeitsensoren

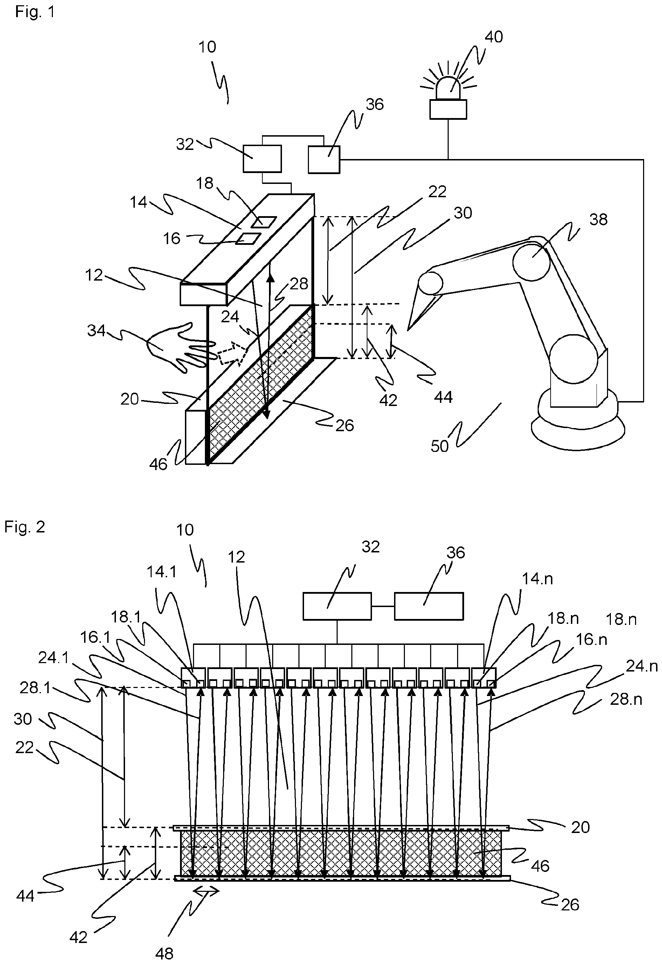

Fig. 1 zeigt eine schematische Darstellung einer Vorrichtung 10 zur Überwachung eines Schutzbereichs 12. Der Schutzbereich 12 wird auf einer Seite durch wenigstens einen Lichtlaufzeitsensor 14 mit einen Sender 16 und einem Empfänger 18 und auf der gegenüberliegenden Seite durch ein Begrenzungselement 20 begrenzt. Lichtlaufzeitsensor 14 und Begrenzungselement 20 sind in einem ersten Abstand 22 voneinander angeordnet. Der Sender 16 sendet gepulste Lichtstrahlen 24 in den Schutzbereich 12 aus. Die Lichtstrahlen 24 werden an einem Referenzelement 26, beispielsweise einer reflektierenden Folie, so reflektiert oder remittiert, dass sie als reflektierte oder remittierte Lichtstrahlen 28 zurück zum Empfänger 18 des Lichtlaufzeitsensors 14 gelangen. Das Referenzelement 26 liegt dem Lichtlaufzeitsensor 14 in einem zweiten Abstand 30 gegenüber.

Durch die Verwendung von gepulsten Lichtstrahlen 24, 28 kann die vom Aussenden der Lichtstrahlen 24 bis zum Empfangen der reflektierten oder remittierten Lichtstrahlen 28 verstrichene Lichtlaufzeit ermittelt werden, die repräsentativ für den zweiten Abstand 30 ist. Die Ermittlung der Lichtlaufzeit erfolgt durch eine Auswerteeinheit 32, die Teil des Lichtlaufzeitsensors 14 oder als separate Einheit ausgebildet sein kann.

Beim Eindringen eines Objektes 34 (im Beispiel eine Hand) in den Schutzbereich 12, werden die Lichtstrahlen 24 vom Objekt 34 remittiert oder reflektiert. Aufgrund der verkürzten Laufstrecke der Lichtstrahlen 24, 28 vom Sender 16 zum Empfänger 18 verringert sich die Lichtlaufzeit entsprechend, was von der Auswerteeinheit 32 ermittelt werden kann. Die ermittelte Lichtlaufzeit wird von einer Überwachungseinheit 36 ausgewertet. Basierend auf der Auswertung kann die Überwachungseinheit 36 ein Unterbrechungssignal ausgeben, beispielsweise zum Stoppen einer Maschine 38 (im Beispiel ein Roboter) in einem Gefahrenbereich 50 oder zur Aktivierung eines Warnsignals 40 (im Beispiel eine Warnleuchte).

Die Differenz 42 zwischen dem zweiten Abstand 30 und dem ersten Abstand 22 ist wenigstens so groß wie eine Tiefenauflösung 44 des Lichtlaufzeitsensors 14. Dadurch ist gewährleistet, dass ein Eingriff durch ein Objekt 34 in den Schutzbereich 12 immer sicher erkannt wird, auch wenn die Ausdehnung des Objekts 34 in Richtung der Lichtstrahlen (24, 28) kleiner ist als die Tiefenauflösung 44, da die gemessene Abstandsänderung bei Eintritt eines Objekts in den Schutzbereich immer mindestens der Differenz 42 zwischen dem zweiten Abstand 30 und dem ersten Abstand 22 entspricht.

Der Bereich 46 zwischen Begrenzungselement 20 und Referenzelement 26 ist so ausgestaltet, dass in dem Bereich 46 kein Durchgriff in Richtung der Maschine 38 im Gefahrenbereich 50 möglich ist.

Figur 2 zeigt eine schematische Darstellung einer Vorrichtung zur Überwachung eines Schutzbereichs 12 mit linienförmiger Anordnung einer Vielzahl von Lichtlaufzeitsensoren 14.1, ..., 14.n. Durch die linienförmige Anordnung bilden die ausgesendeten Lichtstrahlen 24.1, ..., 24.n und reflektierten oder remittierten Lichtstrahlen 28.1, ..., 28.n durch ein Lichtgitter oder einen Lichtvorhang einen flächigen Schutzbereich 12.

Der Strahlabstand 48 der von den Lichtlaufzeitsensoren 14.1, ..., 14.n ausgesendeten Lichtstrahlen 24.1, ..., 24.n zueinander bestimmt sich nach der Größe des kleinsten Objektes, das beim Durchtreten des Schutzbereichs 14 noch detektiert werden soll. Bei Anwendungen, in denen beispielsweise der Eingriff eines Fingers detektiert werden soll, sind diese vorzugsweise nicht größer als 15 mm

Der Schutzbereich 12 wird auf einer Seite durch Lichtlaufzeitsensoren 14.1, ..., 14.n mit Sendern 16.1, ..., 16.n und Empfängern 18.1, ..., 18.n und auf der gegenüberliegenden Seite durch ein Begrenzungselement 20 begrenzt. Lichtlaufzeitsensoren 14.1, ..., 14.n und das Begrenzungselement 20 sind in einem ersten Abstand 22 angeordnet. Die Sender 16.1, ..., 16.n senden gepulste Lichtstrahlen 24.1, ..., 24.n in den Schutzbereich 12 aus. Die Lichtstrahlen 24.1, ..., 24.n werden an einem Referenzelement 26, beispielsweise einer reflektierenden Folie, so reflektiert oder remittiert, dass sie als reflektierte oder remittierte Lichtstrahlen 24.1, ..., 24.n zurück zu den Empfängern 18.1, ..., 18.n der Lichtlaufzeitsensoren 14.1, ..., 14.n gelangen. Das Referenzelement 26 liegt dem Lichtlaufzeitsensors 14.1, ..., 14.n in einem zweiten Abstand 30 gegenüber.

Durch die Verwendung von gepulsten Lichtstrahlen 24 kann die vom Aussenden der Lichtstrahlen 24.1, ..., 24.n bis zum Empfangen der reflektierten oder remittierten Lichtstrahlen 24.1, ..., 24.n verstrichene Lichtlaufzeit ermittelt werden, die repräsentativ für den zweiten Abstand 30 ist.

Die Lichtlaufzeitsensoren 14.1, ..., 14.n sind mit einer zentralen Auswerteeinheit 32 verbunden, die die Lichtlaufzeit der Lichtstrahlen ermittelt. Alternativ kann jeder der Lichtlaufzeitsensoren 14.1, ..., 14.n eine eigene Auswerteeinheit aufweisen. Die ermittelten Lichtlaufzeiten werden von einer Überwachungseinheit 36 ausgewertet.

Basierend auf der Auswertung kann die Überwachungseinheit 36 ein Unterbrechungssignal ausgeben, beispielsweise zum Stoppen einer Maschine oder zur Aktivierung eines Warnsignals

Beim Eindringen eines Objektes in den Schutzbereich 12, wird zumindest ein Teil der Lichtstrahlen 24.1, ..., 24.n vom Objekt remittiert oder reflektiert. Aufgrund der verkürzten Laufstrecke der Lichtstrahlen vom Sender zum Empfänger verringert sich die Lichtlaufzeit entsprechend, was von der Auswerteeinheit 32 ermittelt werden kann. Die ermittelte Lichtlaufzeit wird von einer Überwachungseinheit 36 ausgewertet. Basierend auf der Auswertung kann die Überwachungseinheit 36 ein Unterbrechungssignal ausgeben, beispielsweise zum Stoppen einer Maschine 38 (im Beispiel ein Roboter) oder zur Aktivierung eines Warnsignals 40 (im Beispiel einer Warnleuchte).

Die Differenz 42 zwischen dem zweiten Abstand 30 und dem ersten Abstand 22 ist wenigstens so groß wie eine Tiefenauflösung 44 der Lichtlaufzeitsensoren 14.1, ..., 14.n. Dadurch ist gewährleistet, dass ein Eingriff durch ein Objekt 34 in den Schutzbereich 12 immer sicher erkannt wird, auch wenn die Ausdehnung des Objekts 34 in Richtung der Lichtstrahlen (24, 28) kleiner ist als die Tiefenauflösung 44, da die gemessene Abstandsänderung bei Eintritt eines Objekts in den Schutzbereich immer mindestens der Differenz 42 zwischen dem zweiten Abstand 30 und dem ersten Abstand 22 entspricht.

Der Bereich 46 zwischen Begrenzungselement 20 und Referenzelement 26 ist so ausgestaltet, dass in dem Bereich 46 kein Durchgriff in Richtung der Maschine 38 im Gefahrenbereich 50 möglich ist.

Analog zu dem in Figur 2 gezeigten Ausführungsbeispiel kann mit einer matrixförmigen Anordnung von Lichtlaufzeitsensoren auch ein volumenförmiger Schutzbereich überwacht werden.

## Patentansprüche

1. Vorrichtung (10) zur Überwachung eines Schutzbereichs (12) mit
- zumindest einem Lichtlaufzeitsensor (14, 14.1, ..., 14.n), derwenigstens einen Sender (16, 16.1, ..., 16.n) zum Aussenden von Lichtstrahlen (24, 24.1, ..., 24.n) in den Schutzbereich (12), und wenigstens einen Empfänger (18, 18.1, ..., 18.n) zum Empfangen von reflektierten oder remittierten Lichtstrahlen (28, 28.1, ..., 28.n) aufweist,
- einem dem Lichtlaufzeitsensor (14, 14.1, ..., 14.n) in einem ersten Abstand (22) gegenüberliegenden, den Schutzbereich (12) zumindest teilweise begrenzenden Begrenzungselement (20),
- einem dem Lichtlaufzeitsensor (14, 14.1, ..., 14.n) in einem zweiten Abstand (30) gegenüberliegenden Referenzelement (26) zum Reflektieren oder Remittieren der ausgesendeten Lichtstrahlen ((24, 24.1, ..., 24.n)),
- zumindest einer Auswerteeinheit (32) zum Ermitteln einer Lichtlaufzeit zwischen Aussenden der Lichtstrahlen (24, 24.1, ..., 24.n) und Empfangen der reflektierten oder remittieren Lichtstrahlen (28, 28.1, ..., 28.n), und
- einer Überwachungseinheit (36) zur Auswertung der ermittelten Lichtlaufzeit, **dadurch gekennzeichnet, dass** der zweite Abstand (30) größer als der erste Abstand (22) ist und eine Differenz zwischen dem zweiten Abstand (30) und dem ersten Abstand (11) wenigstens so groß ist, wie eine Tiefenauflösung (44) des Lichtlaufzeitsensors (14, 14.1, ..., 14.n).

2. Vorrichtung (10) nach Anspruch 1, wobei eine Vielzahl von Lichtlaufzeitsensoren (14.1, ..., 14.n) zur Überwachung eines flächenförmigen Schutzbereichs (12) in einer Linie angeordnet sind.

3. Vorrichtung (10) nach Anspruch 1, wobei eine Vielzahl von Lichtlaufzeitsensoren (14.1, ..., 14.n) zur Überwachung eines volumenförmigen Schutzbereichs in einer Matrix angeordnet sind.

4. Vorrichtung (10) nach einem der Ansprüche 2 oder 3, wobei benachbarte Lichtlaufzeitsensoren (14.1, ..., 14.n) einen Strahlabstand (48) der Lichtstrahlen (24.1, ..., 24.n) von weniger als 15 mm, bevorzugt von weniger als 10 mm aufweisen.

5. Vorrichtung (10) nach einem der Ansprüche 2 bis 4 mit einer zentralen Auswerteeinheit (32) zum Ermitteln der Lichtlaufzeiten der Vielzahl von Lichtlaufzeitsensoren (14.1, ..., 14.n)

6. Vorrichtung (10) nach einem der Ansprüche 2 bis 4, wobei jedem Lichtlaufzeitsensor (14.1, ..., 14.n) eine eigene Auswerteeinheit zugeordnet ist.

7. Vorrichtung (10) nach einem der vorhergehenden Ansprüche, wobei eine Überwachungseinheit (36) zum Erzeugen eines Unterbrechungssignals eingerichtet ist, wenn die ermittelte Lichtlaufzeit mindestens eines Lichtlaufzeitsensors (14, 14.1, ..., 14.n) von einer vorbestimmten Lichtlaufzeit zumindest um einen vorgegebenen Schwellenwert abweicht.

## Claims

1. Device (10) for monitoring a protected area (12) with
- at least one light runtime sensor (14, 14.1, ..., 14.n) which has at least one transmitter (16, 16.1, ..., 16.n) for emitting light beams (24, 24.1, ..., 24.n) into the protected area (12), and at least one receiver (18, 18.1, ..., 18.n) for receiving reflected or remitted light beams (28, 28.1, ..., 28.n)
- a limiting element (20) opposite the light runtime sensor (14, 14.1, ..., 14.n) at a first distance (22) and at least partially limiting the protected area (12),
- a reference element (26), opposite the light runtime sensor (14, 14.1, ..., 14.n) at a second distance (30), for reflecting or remitting the emitted light beams ((24, 24.1, ..., 24.n))
- at least one evaluation unit (32) for determining a light runtime between emitting the light beams (24, 24.1, ..., 24.n) and receiving the reflected or remitted light beams (28, 28.1, ..., 28.n), and
- a monitoring unit (36) for evaluating the determined light runtime, **characterized in that** the second distance (30) is greater than the first distance (22) and a difference between the second distance (30) and the first distance (11) is at least as great as a depth resolution (44) of the light runtime sensor (14, 14.1, ..., 14.n).

2. Device (10) according to claim 1, wherein a plurality of light runtime sensors (14.1, ..., 14.n) are arranged in a line for monitoring an area-shaped protection area (12).

3. Device (10) according to claim 1, wherein a plurality of light runtime sensors (14.1, ..., 14.n) are arranged in a matrix for monitoring a volume-shaped protection area.

4. Device (10) according to one of claims 2 or 3, wherein adjacent light runtime sensors (14.1, ..., 14.n) have a beam spacing (48) of the light beams (24.1, ..., 24.n) of less than 15 mm, preferably of less than 10 mm.

5. Device (10) according to one of the claims 2 to 4 with a central evaluation unit (32) for determining the light runtimes of the plurality of light runtime sensors (14.1, ..., 14.n)

6. Device (10) according to one of claims 2 to 4, wherein each light runtime sensor (14.1, ..., 14.n) is assigned its own evaluation unit.

7. Device (10) according to one of the preceding claims, wherein a monitoring unit (36) is set up to generate an interruption signal if the determined light runtime of at least one light runtime sensor (14, 14.1, ..., 14.n) deviates from a predetermined light runtime at least by a predetermined threshold value.

## Revendications

1. Dispositif (10) de surveillance d'une zone de protection (12) comprenant
- au moins un capteur de temps de propagation de la lumière (14, 14.1, ..., 14.n), qui présente au moins un émetteur (16, 16.1, ..., 16.n) pour émettre des rayons lumineux (24, 24.1, ..., 24.n) dans la zone de protection (12), et au moins un récepteur (18, 18.1, ..., 18.n) pour recevoir des rayons lumineux réfléchis ou réémis (28, 28.1, ..., 28.n),
- un élément de délimitation (20) situé en face du capteur de temps de propagation de la lumière (14, 14.1, ..., 14.n) à une première distance (22) et délimitant au moins partiellement la zone de protection (12),
- un élément de référence (26) opposé au capteur de temps de propagation de la lumière (14, 14.1, ..., 14.n) à une deuxième distance (30) pour réfléchir ou réémettre les rayons lumineux émis ((24, 24.1, ..., 24.n)),
- au moins une unité d'évaluation (32) pour déterminer un temps de propagation de la lumière entre l'émission des rayons lumineux (24, 24.1, ..., 24.n) et la réception des rayons lumineux réfléchis ou réémis (28, 28.1, ..., 28.n), et
- une unité de surveillance (36) pour l'évaluation du temps de propagation de la lumière déterminé,
**caractérisé en ce que** la deuxième distance (30) est supérieure à la première distance (22) et une différence entre la deuxième distance (30) et la première distance (11) est au moins aussi grande qu'une résolution en profondeur (44) du capteur de temps de propagation de la lumière (14, 14.1, ..., 14.n).

2. Dispositif (10) selon la revendication 1, dans lequel une pluralité de capteurs de temps de propagation de la lumière (14.1, ..., 14.n) sont disposés en ligne pour surveiller une zone de protection (12) en forme de surface.

3. Dispositif (10) selon la revendication 1, dans lequel une pluralité de capteurs de temps de propagation de la lumière (14.1, ..., 14.n) sont disposés en une matrice pour surveiller une zone de protection (12) en forme de volume.

4. Dispositif (10) selon l'une des revendications 2 ou 3, dans lequel des capteurs de temps de propagation de lumière (14.1, ..., 14.n) voisins présentent une distance (48) entre les rayons lumineux (24.1, ..., 24.n) inférieure à 15 mm, de préférence inférieure à 10 mm.

5. Dispositif (10) selon l'une des revendications 2 à 4 avec une unité d'évaluation centrale (32) pour déterminer les temps de propagation de la lumière de la pluralité de capteurs de temps de propagation de lumière (14.1, ..., 14.n)

6. Dispositif (10) selon l'une des revendications 2 à 4, dans lequel une unité d'évaluation propre est associée à chaque capteur de temps de propagation de lumière (14.1, ..., 14.n).

7. Dispositif (10) selon l'une des revendications précédentes, dans lequel une unité de surveillance (36) est conçue pour générer un signal d'interruption lorsque le temps de propagation de la lumière déterminé d'au moins un capteur de temps de propagation de lumière (14, 14.1, ..., 14.n) s'écarte d'un temps de propagation de la lumière prédéterminé au moins d'une valeur seuil prédéfinie.
